# EUROPEAN PATENT SPECIFICATION

(11) **EP 2 404 647 B1**
(45) Date of publication and mention of the grant of the patent: **27.03.2013**
(21) Application number: 10382188.0
(22) Date of filing: 08.07.2010
(51) Int. Cl.: B01D 11/02, B27K 7/00

(54) **Method for extracting organic compounds from granulated cork**
Verfahren zur Extraktion von organischen Verbindungen aus granuliertem Kork
Methode d'extraction de composes organiques du liege granule

(43) Date of publication of application: 11.01.2012
(73) Proprietor: Dartes Krup, S.L., 08006 Barcelona (ES); Gestion Integral de la Tecnología, S.L., 46010 Valencia (ES)
(72) Inventor: Sanjuán Blasco, Germán, 46010, VALENCIA (ES)
(74) Representative: Isern-Jara, Nuria

(56) References cited:
- EP-A1- 0 264 484
- EP-A1- 0 448 472
- EP-A1- 0 616 838
- WO-A1-2004/014436
- DE-A1- 3 631 236
- DE-A1-102004 002 159
- DE-C- 616 592
- FR-A1- 2 798 879
- GB-A- 2 089 403
- LU-A1- 45 849
- US-A- 2 491 060
- US-A1- 2007 122 307

## Description

### OBJECT OF THE INVENTION

The present invention relates to a method for extracting organic compounds present in granulated cork.

Said extraction is performed by dispersively applying a supercritical fluid comprising at least two different gases in a supercritical state.

Another preferred extraction comprises a first extraction step by dispersively applying vapor and then a second extraction step by dispersively applying a supercritical fluid comprising at least two gases in a supercritical state.

### BACKGROUND OF THE INVENTION

Cork is a natural product derived from the bark of the cork tree. Among its most prominent features it is highlighted that has very low weight, is highly elastic, porous, expandable maintaining its original form, and is impermeable to liquids and permeable to gases. Therefore the cork has been used for many years for manufacturing caps for containers containing liquids, especially wine and other alcoholic beverages.

For manufacturing such caps, the bark taken from the tree is subjected to various making and selection processes, most of them mechanics, in order to achieve the maximum number of caps that meet the different requirements demanded by the market.

During said making process significant amounts of cork parts are removed, either because do not meet the appearance conditions required by the cap, or because clear contamination signs are appreciated, or due to its shape and size. The useless bark parts together with the sawdust or cork dust produced in the cap manufacture is considered to be around 100,000 tons per year. Said material, meeting all the characteristics of the cork, has been used to produce a granulated cork, which after certain operations and with the use of binders achieves to manufacture cork caps of different types and sizes, completing the cap demand existing in the world and which is estimated in more than 15,000 million annually.

Before being cut up, the natural cork has a density ranging between 130 and 250 grams per cubic decimeter (dm³) in terms of quality and origin of the bark. Once cleaned and cut up into granules, the granules that are commonly used for cap manufacturing have a size from 1 to 8 mm with a density between 55 and 70 grams per dm³.

One of the problems of using natural cork is the presence of aromatic organic compounds that deteriorate the cork quality and that additionally undesirable alter the quality and the natural organoleptic properties of liquids contained in containers capped by caps made of cork. This contamination of aromatic organic compounds has been produced in the cork tree itself, when its bark absorbs halophenols that are transported by the atmosphere or by rain; or either accidentally reaching the cork tree or by the use of pesticides comprising halophenols.

These contaminant organic compounds are part of the haloanisoles group, such as methylisobomeol and its derivatives, geosmine methyltio-ethyl-pyrazine, alcohols, unsaturated ketones and among all, the chloroanisoles such as 2,4,6-trichlosoanisole (TCA) and 2,3,4,6-tetrachloroanisol (TeCA) have to be outlined. The physicochemical characteristics of each one of the compounds are listed in Table 1.

**Table 1. Physicochemical characteristics of several halophenoles and haloanisoles.**

| Molecule (No CASR*) | Melt point in °C at 760mmHg^{#} | Boil point in °C at 760mmHg^{#} | Vapor pressure (mmHg#) | LOG P Octanol/Water$ | Water solubility (mg/l) | Henry CNST (L·atm/mol) | Molecular weight |
|---|---|---|---|---|---|---|---|
| TCA (87-40-1) | 61.5 | 241.0 | 0.0228 | 4.11 | 10.0 | 130.0 | 211.48 |
| TCP (88-06-2) | 69.0 | 246.0 | 0.008 | 3.69 | 800.0 | 2.6 | 197.45 |
| TBA (607-99-8) | 88.0 | 298.0 | 0.644 -3 x10⁻³ | 4.48 | 0.994 | 20.2 | 344.83 |
| TBP (118-79-6) | 95.5 | 286.0 | 0.303 x -3 10 | 4.13 | 70.0 | 0.035 | 330.80 |
| TeCA (938-86-3) | 84.0 | - | 0.00319 | 4.51 | 1.35 | 96.1 | 245.92 |
| TeCP (58-90-2) | 70.0 | 150.0⁺ | 6.66 x 10 3 | 4.45 | 23.0 | 8.84 | 231.89 |
| PCA (1825-21-4) | 107.0-109.0 | - | 0.592 x -3 10⁻ | 5.45 | 0.354 | 1930.0 | 280.37 |
| PCP (87-86-5) | 174.0 | 309.5 | ³ 1.1 x 10⁻³ | 5.12 | 14.0 | 0.025 | 266.34 |

| | | | | | | | |
|---|---|---|---|---|---|---|---|
| Source: PhysProp Database Syrres Inc. (2008) TCA = 2,4,6-trichloroanisole TCP = 2,4,6-trichlorophenole TBA = 2,4,6-tribromoanisole TBP = 2,4,6-tribromophenole TeCA = 2,3,4,5-tetrachloroanisole TeCP = 2,3,4,6-tetrachlorophenole PCA = pentachloroanisole PCP = pentachlorophenole * No CASR = Number registered in the CAS, in English the Chemical Abstracts Service, a unique numerical identifier for chemical compounds. # mmHg = pressure unit expressed in Torr, pressure exerted at the base of one-millimeter mercury column. $ LOG P Octanol/Water= the divisional coefficient. It is the ratio of the concentrations of a compound at its two phases within a mixture of two balanced immiscible solvents; in this case a hydrophobic and a hydrophilic solvent. + The boiling temperature of TeCP indicated is a pressure or 1.5 mmHg. | | | | | | | |

Several methods for extracting these compounds from the cork have been described, starting with a former method described by F. Bordas in 1904 wherein cork pieces are heated for 10 minutes in a container heated at 120°C, followed by a vacuum application, subsequently applying high pressure and then heating again up to 130°C for 10 minutes.

According to another method described by Champcork, a vapor with a temperature of 130°C is applied to cork pieces under a pressure of 180 kPa for 18 to 20 minutes, then enabling the return of the atmospheric pressure allowing leaking out the vapor.

These two methods have several disadvantages, including a low efficiency in the extraction of organic compounds, in comparison with the use of granulated cork, a varied extraction by not homogeneously applying vapor, heat and/or pressure, a partial efficiency against microorganisms, and the use of chemicals products harmful to the environment and/or humans. In addition, the pressure and temperature conditions to which the sheets are subjected produce unwanted deformations.

According to the Rosa and Montebelo system, the cork is treated using vapor injection at different pressure and temperature conditions, usually in containers with mechanical movement forwarding the cork by pushing, wherein the cork is inserted into a transport system using a load mouth and another of unload, maintaining the product under certain conditions and times. In this way, an extraction of organic compounds up to 60% according only to the initial content is achieved, which in many occasions does not reach the levels of organic compounds allowed for the cork. In addition, facilities utilizing this system do not always control the emission of extracted products or temperature and vapor quality conditions, the latter to prevent excessive humidity of the cork which would require subsequent dryings, whereby this system is incomplete.

The document WO2005/025825 describes a extraction process using compressed gases at temperatures between 10 and 120°C and pressures between 10 and 600 bars, characterized in that the extraction is carried out under isobaric conditions, the compressed gas is loaded in radial or axial directions by the material and the extracted load is combined with an absorbent material.

In the speech of D. Chouchi entitled "SFE of trichloroanisole from cork" for the 4th international symposium on supercritical fluids a continuous extraction process of trichloroanisole (TCA) using CO₂ at a supercritical state in two types of cork: caps soaked in a mixture of tartaric acid, malic acid and alcohol; and caps soaked in a culture medium based on tartaric acid, malic acid and glucose for 3 weeks in an oven at 37°C and optionally cultured with bacteria or mold, has been described. The extraction was performed at a temperature of 40°C and a pressure of 14 mPa (140 bars), generating an extraction yield of the TCA from 75 to 95%.

The document WO 98/16288 describes a method and an installation for extracting inorganic and optically organic compounds using a supercritical fluid such as the CO₂ of a substance. Preferably a surfactant compound is added to the supercritical fluid. The installation for implementing this method includes means for contacting the materials with a wooden base with such supercritical fluid and means for taking the gas to a supercritical state.

The document FR 2798879 claims a method for treating the cork or a material based on cork, wherein the cork or said material based on cork contacts a dense fluid under pressure, at a temperature from 10 to 120°C and a pressure from 10 to 600 bars, a cosolvent is added to the dense fluid under pressure at a rate of 0.01 to 10% by total weight, this fluid being carbon dioxide in a supercritical state and such cosolvent is selected from water and aqueous solutions.

The main problem with these four documents is the time in that a supercritical fluid has to be used in order to reach acceptable levels of organic compounds in the cork. Moreover, the addition of water as cosolvent, which causes a disinfection and/or asepsis described in the state of the art, whereas the addition of water is because the cork is processed with low humidities and a very high amount of CO₂ leading to a dehydration and subsequently alterations on the physical characteristics of the cork. Another inconvenience is the requirement of having to use closed containers of the type of autoclaves which are prepared for the pressures and temperatures to which the cork is subjected. These containers make the cork into the container remains static and preferential currents of the fluid are produced, carrying out an impartial extraction of the cork therein. Likewise, a material load and unload is required, having to depressurize the container between each load, which brings with it a processing time rise, a high waste of gases and when lowering the pressure below the triple point of the CO₂ its solidification in the form of carbon snow which tends to agglomerate the cork is produced, and in the same way producing a strong dehydration.

The present invention applies an extraction using a supercritical fluid comprising at least two gases in a supercritical state, without the need of adding any cosolvent or water, and also at least one of the gases having disinfectant properties as required in claims 1.

In addition, the extraction using a supercritical fluid is combined with an extraction by continuously applying vapor, increasing the efficiency and reducing the costs of the assembly extraction compared to each type of extraction separately.

For each one of the extractions, extractors fixed to a vibratory base are used, which causes the extraction to be uniformly performed over the entire granulated cork.

In order to continuously apply the two extractions, the cork is vertically moved from one extractor to another using at least one stopper that further adapts the cork to pressure and temperature changes existing in each extractor.

### DESCRIPTION OF THE INVENTION

The present invention relates to a method as recited in claim 1.

A preferred extraction comprises a first extraction step by dispersively applying vapor and a then second extraction step by dispersively applying a supercritical fluid comprising at least two gases in a supercritical state.

Said extraction is performed in extractors supported on vibratory bases and the movement of the granulated cork between one extractor and another is performed using at least one stopper.

The gases proceeding from the extraction are recirculated through several different reticulation circuits to make the maximum use of gases. One of the components in which the recirculation consists is a vertical condenser with conical body with the larger surface at the top and the smaller surface on the bottom.

Different particular modes for carrying out this invention, defined by the dependent claims.

### DESCRIPTION OF THE DRAWINGS

The present specification is complemented with the following preferred and not limitative figures of the invention.

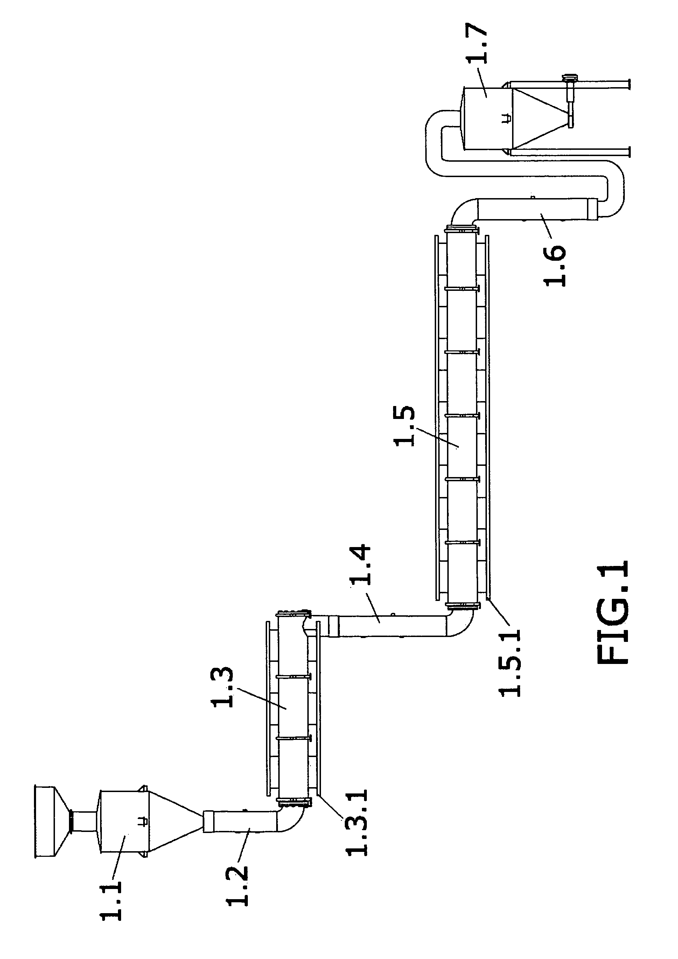

Figure 1 squematically relates to the process for extracting organic compounds from granulated cork according to one of the preferred embodiments of the invention. This embodiment refers to the load of the granulated cork into a load hopper (1.1), the movement by a first stopper (1.2), extraction using vapor in a first extractor (1.3), the movement by a second stopper (1.4), extraction using a supercritical fluid in a second extractor (1.5), the movement by a third stopper (1.6) and unload from the storage hopper (1.7).

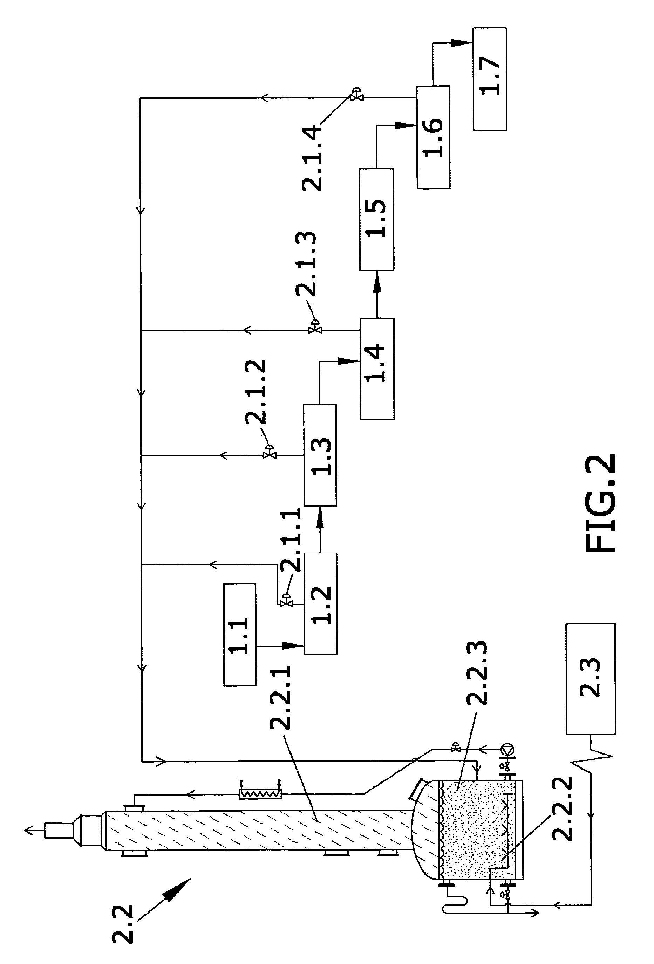

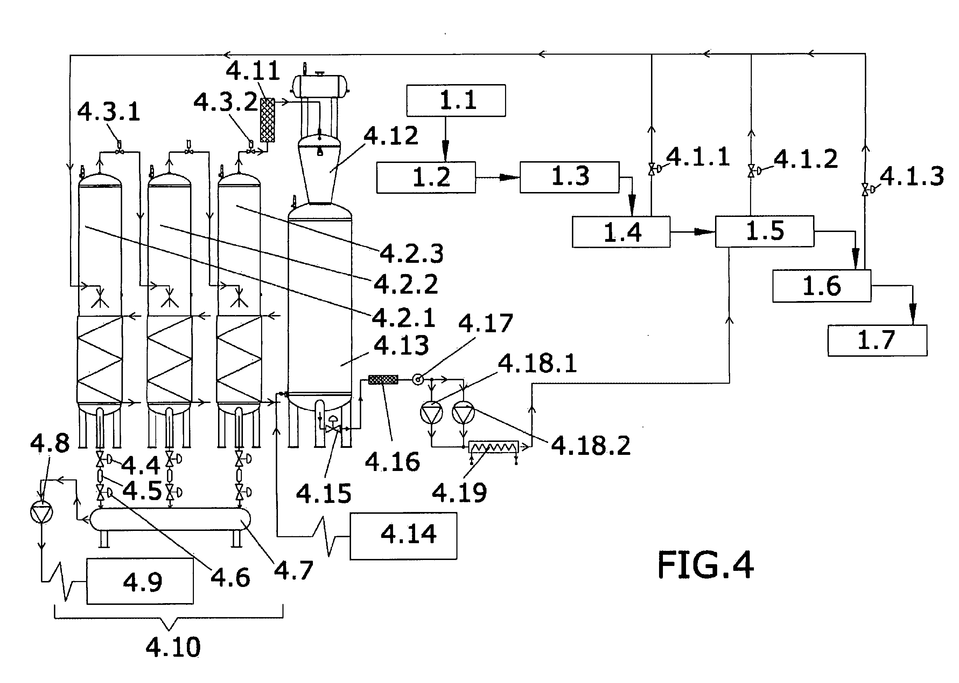

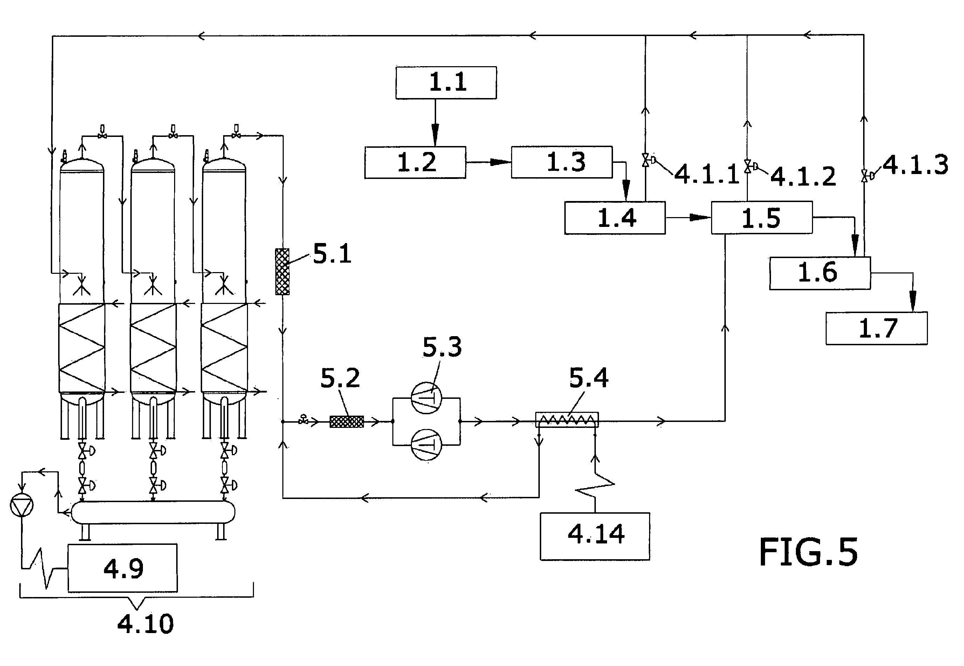

Figure 2 squematically details the process for washing the gases with a pressure lower than 10 bar proceeding from the extraction process according to Figure 1 in a conventional gas-washing-tower (2.2). In said gas-washing tower, a residue mixture proceeding from the process described in Figures 4 and 5 (2.3) further exists.

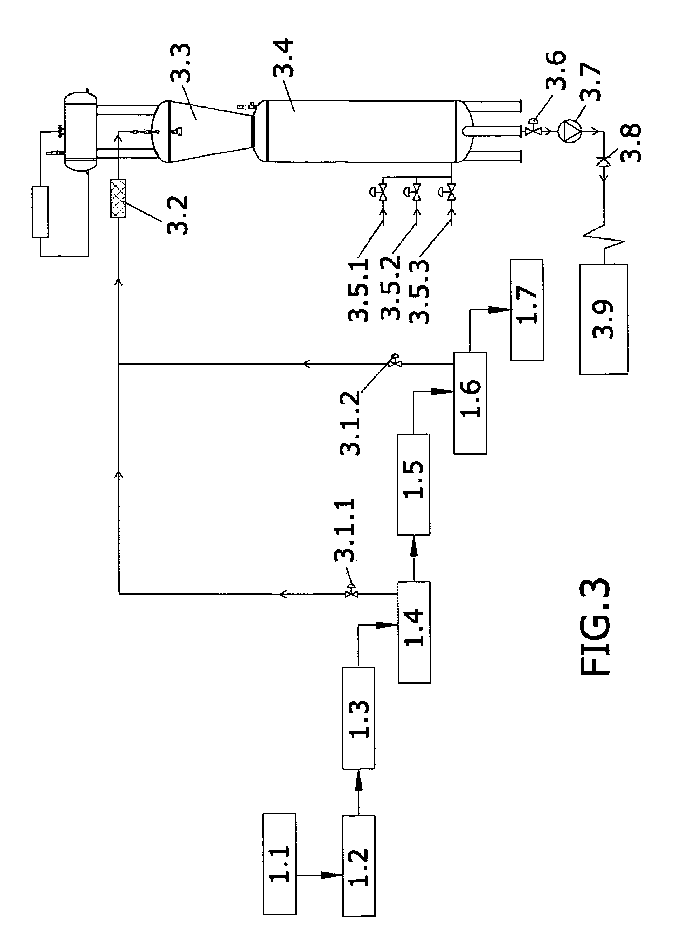

Figure 3 schematically details the gas recovery by driving gases with a pressure between 10 and 60 bars proceeding from the extraction process according to Figure 1 toward a recovery condenser (3.3), located above a recovery lung (3.4) wherein the gases are condensed and circulated using a pump (3.7) toward the process described in Figures 4 and 5 (3.9).
Figure 4 schematically comprises the first option for recirculating a supercritical fluid through the separation of gases in process separators (4.2.1, 4.2.2 and 4.2.3), wherein the extracted residues are driven to a reservoir (4.7) and then to the process described in Figure 2 (4.9), collectively referred as (4.10). The gases from the last process separator are driven to a process condenser (4.12), are condensed and stored in a process lung (4.13), wherein the liquid proceeding from the process described in Figure 3 is mixed (4.14). The liquid that subsequently comes out of the process lung passes through two pumps (4.18.1 and 4.18.2) and passes through a heater (4.19) for being introduced as a supercritical fluid in the extraction process into the second extractor (1.5).
Figure 5 schematically comprises the second option for recirculating a supercritical fluid using the separation of gases as described in Figure 4, collectively referred as (4.10). Unlike Figure 4, the gases proceeding from the last separator process are mixed with the liquefied gases proceeding from the process described in Figure 3 (4.14), which have previously been evaporated in the cooler (5.4) which is located after the compressors (5.3), wherewith a significant energy saving is achieved. The mixture of gases is then introduced as the supercritical fluid in the extraction process into the second extractor (1.5).

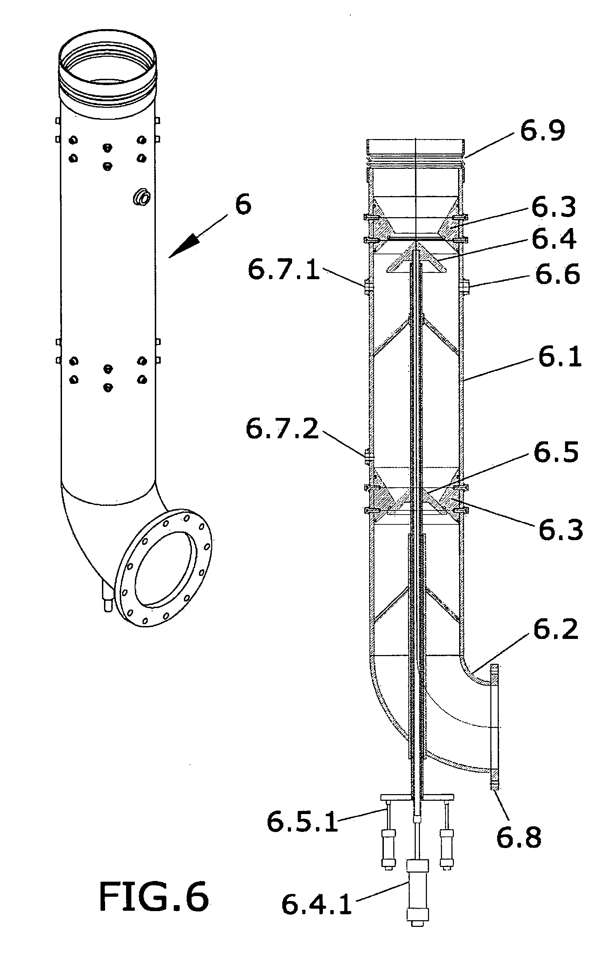

Figure 6 is a perspective and sectional view that illustrates a stopper (6), the stopper (1.2) (1.4) or (1.6) being detailed as example.

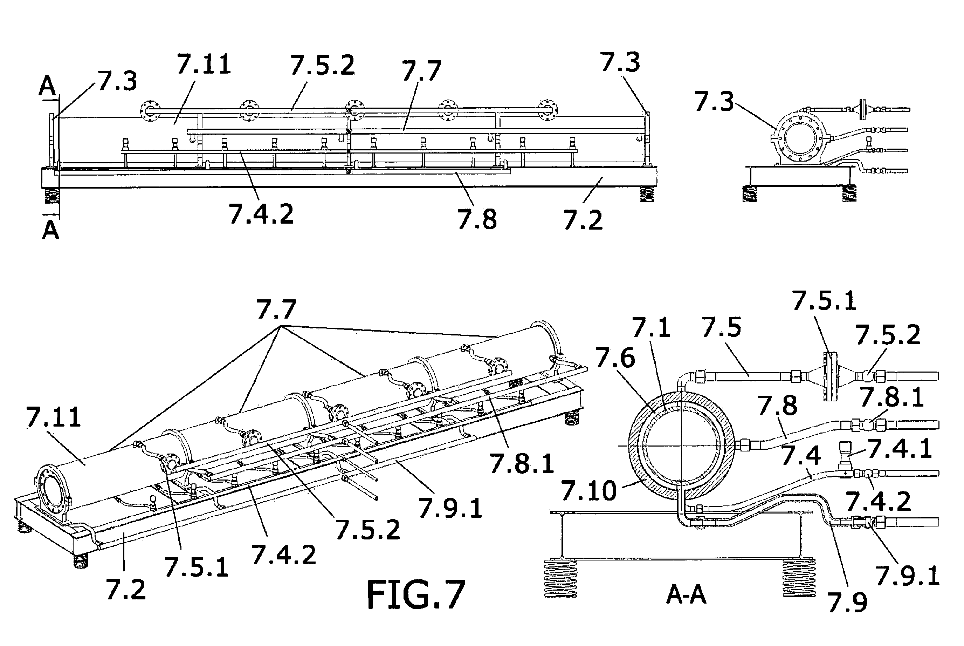

Figure 7 is an elevational, side, perspective, and A-A' sectional view that sets forth an extractor, the extractor (1.5) being detailed as example.

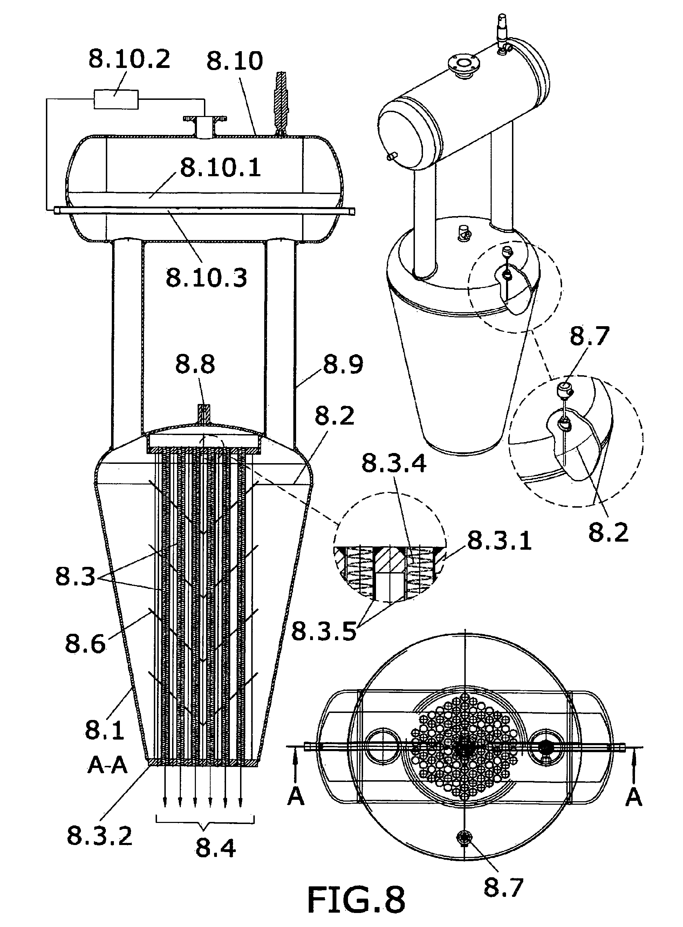

Figure 8 is a perspective, plant, and A-A' sectional view that shows a condenser, the condenser (3.3) or (4.12) being detailed as example, indicating that the larger surface is located at the top and the smaller surface is located at the bottom.

For the purpose to simplify the process and being able to more precisely specify each component, each part has been numbered correlatively to the numbering of its corresponding figures. In the preferred embodiment of the invention each part is described in more detail.

### PREFERRED EMBODIMENT OF THE INVENTION

### Process for extracting organic compounds from granulated cork

### Granulated cork.

The whole invention departs from granulated cork with different sizes preferably between 0.5 and 10 mm, optionally proceeding from cork granulation.

### Extraction using a supercritical fluid.

The present invention relates to the extraction of organic compounds from granulated cork by dispersively applying a supercritical fluid, wherein said supercritical fluid comprises at least two different gases in a supercritical state,

According to the invention at least carbon dioxide (CO₂) and nitrous protoxide (N₂O) are used, both in a supercritical state, in proportions ranging from 90% to 40% for CO₂ and 10% to 60% for N₂O, respectively. These gases are completely compatible with each other and the union of their properties improves the behavior in the extraction and especially in the depressurization, avoiding the "sublimation" effect, because they have very similar critical point, but a triple point with different temperatures and pressures. One of the gases has fungal characteristics that confer it sterilization or bactericidal capacity, which gives an added characteristic of greater efficiency, in comparison with, for example, the assumption of the water as cosolvent.

One or several gases can be added to this mixture of two gases, as long as these may be combined with the CO₂ and N₂O in a supercritical state. Compounds meeting this requirement preferably proceed from the alkanes, alkenes, or organic alcohols family of such as ethanol.

The extraction process is performed in an extractor, which will be separately disclosed in more detail later in a paragraph, wherein the supercritical fluid is applied at pressures between75 and 150 bars, at temperatures between 60 and 90°C preferably for more than 10 minutes. The extractor pressure is regulated through the use of individual valves in the supercritical fluid injectors and therefore several pressures can be applied along the extractor. Similarly the temperature inside the extractor is controlled through the presence of at least one heating-jacket. The extractor used for the extraction using a supercritical fluid comprises several jackets, each one regulated by its own vapor or heater fluid inlet and outlet, whereby each section can have a different temperature. The use of several pressures and temperatures in sections along the extractor causes that each organic compound that may be present in the granulated cork can be melted according to its own physical-chemical characteristics, previously disclosure.

The contact of the granulated cork with the supercritical fluid within the extractor is increased by dispersively injecting the supercritical fluid through the injectors, optionally being two injectors at each outlet in the extractor, by applying a vibration to the extractor and optionally varying the extractor angle. All this provides a turbulence that causes the extraction to be much more effective, uniformly for all the cork, and in a shorter time.

### Continuously extraction using vapor and a supercritical fluid.

Another preferred and not limitative embodiment of the invention is to combine the extraction by dispersively applying vapor and a subsequent extraction using a supercritical fluid in a dispersed manner, previously described. This combination is further continuously performed, avoiding the use of several facilities, with problems and time losses in loading and unloading at each step and the increased capacity for capturing the gases proceeding from the process.

The process would then follow the following steps: a first extraction step by applying vapor in a first extractor, very similar to the extractor for the extraction using a supercritical fluid but with some differences described later in a paragraph, and a second extraction step by applying a supercritical fluid, previously disclosed.

The vapor application is performed at a pressure between 1 and 10 bars and at a temperature above 80°C preferably for more than 5 minutes.

The application of a vapor extraction before the supercritical fluid extraction, especially in a continuous process, has as advantages that in the first step up to 70% of extractions are easily, quickly and cheaply achieved, whereas the cannulae in the cork have already been expanded by applying vapor at temperatures and pressures necessary for this extraction. This makes that during the supercritical fluid extraction a low content of organic compounds initially exists and the entire cork is more easily penetrated with the supercritical fluid, reducing the process to lower cost levels and increasing the yield of the extraction.

In order to perform the two continuous extractions a stopper is used. This stopper carries out a movement and adaptation of the granulated cork to the pressure and temperature changes between the first and second extractors. Said stopper is described in more detail in a separate paragraph.

A preferred and not limitative embodiment of the invention is illustrated in Figure 1.

The granulated cork is loaded into a load hopper (1.1), preferably continuously, from which, and through a first stopper (1.2) is dosed into a first extractor (1.3). The extraction is performed in this first extractor, using vapor according to the previous specifications, injected through a manifold (1.3.1) and subsequently through injectors going from the manifold to inside the extractor. The cork is then moved to a second stopper (1.4) and dosed into a second extractor (1.5). The extraction is performed in this second extractor using a supercritical fluid according to the previous specifications, comprising at least two different gases in a supercritical state, injected through another manifold (1.5.1) and subsequently through the injectors going from the manifold to inside the extractor. The cork is moved by a third stopper (1.6) optionally toward a shift tube to be unloaded into a storage hopper (1.7).

It is clear that the amount and dimensions of the elements is optional and depend among others on the characteristics of each plant, factory and preferences.

### Recirculation of gases.

In order to recycle to the maximum the gases proceeding from the embodiment of the invention previously described, and taking into account that the use of for example a supercritical fluid normally increases the cost of extractions with said fluids, several circuits illustrated in Figures 2 to 5 have been installed.

In figure 2 the driving of gases with a pressure less than 10 bars is indicated. These gases come from the first, second and third stopper ((1.2) (1.4) and (1.6), respectively) and from the first extractor (1.3) and are preferably coupled to a common conduit, preferably using control valves ((2.1.1), (2.1.2) (2.1.3) and (2.1.4), one at each outlet). This conduit goes to a conventional washing-tower (2.2), wherein the gases are dissolved into water, preventing their pouring into the atmosphere.

In the washing-tower (2.2) a water rain (2.2.1) wherein products capable of dissolving the dissolved organic compounds have been incorporated, canceling or reducing their hydrophobic nature, is applied.

The bottom of the tower has a liquid height higher than 1,000 mm. Therein, the residues coming from the process separators described in Figure 4 (indicated by the square (2.3)) are injected through diffusers (2.2.2) located within the core of the washing-tower (2.2) lower reservoir. Said residues are mixed and absorbed by the liquid (2.2.3) of the tower. Periodically, the produced sludges in the facility are drawn off and dried in order to completely control the disposal to an authorized dumper.

In Figure 3 the driving of gases with pressures between 10 and 60 bars coming from the second stopper (1.4) and third stopper (1.6) is indicated, which are preferably coupled to a common pipe, preferably using control valves ((3.1 1) and (3.1.2), at each outlet). The gases in the manifold pass through a filter (3.2) to be driven to the recovery condenser (3.3) wherein the gases are condensed and poured into in the recovery lung (3.4).

In order to maintain the supercritical fluid compositions in the desired percentage, analyses on the fluid in the recovery lung (3.4) are periodically, manually or automatically, performed. When necessary, three different liquefied gases from the external supplying reservoirs are added through valves (3.5.1) (3.5.2) and (3.5.3), in an example of using three different gases in the extraction using the supercritical fluid.

Liquids proceeding from the recovery lung (3.4) are suctioned through a piston pump (3.7) and then passed through a non-return valve (3.8) that hinders the liquefied gases from returning to the pump (3.7) and to the recovery lung (3.4). The liquefied gases are finally directed to the process described in Figures 4 and 5.

In Figure 4 the driving of gases with pressures above 60 bars is indicated. These gases come from the second stopper (1.4), the second extractor (1.5) and the third stopper (1.6) and are preferably coupled to a common conduit, preferably using control valves ((4.1.1) (4.1.2) and (4.1.3) at each outlet). The common conduit drives the gases toward a first process separator (4.2.1).

In this separator a height adjustable to a heater liquid which makes that separated organic compounds remain in a liquid state at the bottom of the process separator, whereas the gases pass through the upper outlet toward the next process separator (4.2.2) using a control valve (4.3.1), is applied. Optionally, there are several separators in series, illustrated in Figure 4 as 3 separators in series.

In each one of these separators the pressure and temperature conditions are varied, in order to separate the organic compounds, trying to maintain the temperature above the melt point thereof in order to maintain them in a liquid state.

The liquids of each process separator are intermittently purged into small containers located at the bottom thereof (4.5) using control valves (4.4). From these small containers the liquid is poured into an accumulating tank (4.7) using another control valve (4.6). From the accumulating tank the liquids are pumped through a pump (4.8) with a suitable pressure to the process described in Figure 2 (indicated by a square (4.9).

The process described for the process separators is the same in this Figure 4 and Figure 5, whereby the assembly of the two figures has been indicated as the assembly (4.10).

From the last process separator, wherein there is preferably a pressure between 40 and 60 bars, there are two options for recirculating the gases coming from this. On one hand a "liquid phase" process, described later with the illustration in Figure 4, and a "gas phase" process, described later with the illustration in Figure 5, can be applied. With the two options conditions between 75 and 150 bars and between 60 and 90°C are achieved by using the gases in the extraction through supercritical fluids. The decision between one and other system will depend on the size of the plant and will be decided based on economic terms regarding to the investment and consumption.

Continuing with Figure 4 and the recirculation process in "liquid phase", the gases coming from the last process separator are directed to a process condenser (4.12) using a control valve (4.3.2) and one or more filters (4.11). The process condenser (4.12) is placed over a process lung (4.13) wherein the condensed and liquefied gases are poured into the process condenser (4.12), described in detail in a separate paragraph. Liquefied gases coming from the process described in Figure 3 (indicated as a square (4.14)) are added to the process lung (4.13) in order to recycle the fluids to the maximum, achieving a near complete recovery by reducing the process costs.

The liquefied gas coming from the process lung (4.13) is circulated through at least one bypass valve (4.15) through at least one filter (4.16), passing by a flowrate controller (4.17), to at least one pump (indicated in Figure 4 as a choice of two pumps in parallel ((4.18.1) and (4.18.2)) that provides the adequate pressure to the gas assembly. Since the supercritical gases coming from this process do not have the adequate temperature for being used in the extraction using a supercritical fluid, these pass earlier through a heater (4.19) to then be injected into the second extractor (1.5).

In figure 5, the driving of gasses with pressures above 60 bars through the same valves than Figure 4 ((4.1.1) (4.1.2) and (4.1.3)) is indicated, and are conducted to the process separators as disclosure in Figure 4 and indicated as the assembly (4.10).

The gases coming from the last process separator are channeled through at least one filter (5.1) to be sucked using at least one non-lubricated piston compressor (5.3), passing earlier through another filter (5.2). The compressor (5.3) compresses the gas from the gasified pressure to the process pressure, in a single step, since the pressure differential to be reached is perfectly possible in this type of compressors.

The fluid compressed and already in supercritical conditions, reaches temperatures above 100°C whereby its cooling must be carried out using a refrigerator (5.4), which can be water or a coolant fluid, up to the desired temperature for the extraction using a fluid supercritical in the extractor (1.5). For cooling, the evaporation of the liquefied gas mixture coming from the process described in Figure 3, indicated by the square (4.14), and which is mixed with the gas coming from the last process separator for maintaining the flowrate required for the process, can also be used. Finally, the gas mixture is injected from the cooler as the supercritical fluid in the second extractor (1.5).

The dissipated energy from the cooling can also be used, for example, for heating the process separators ((4.2.1) (4.2.2) and (4.2.3).

Although the use of several control valves for exiting the gases from the stoppers and extractors has been mentioned, it is understood that these may be the same, as long as the gasses with different pressures are channeled to their respective separators, condensers and washing-towers.

### The stopper

Figure 6 schematically illustrates in perspective a preferred design of one of the stoppers (6).

The first stopper (1.2) must carry the load from the hopper at atmospheric pressure into the first extractor (1.3) that operates at pressures between 1 to 10 bars. The second stopper (1.4) carries the load from the first extractor (1.3) to the second extractor (1.5), adapting the granulated cork to the change of pressures up to 150 bars. The third stopper (1.6) guides the charge from the second extractor (1.5) toward a tube directed to the storage hopper (1.7), wherein an atmospheric or optionally a minimally elevated pressure exists.

In the sectional view it is indicated that each stopper has a body (6.1) constructed by the joint of a vertical pipe section, optionally with the same diameter than the extractors located anteriorly and/or posteriorly, and a curve of 90° (6.2) of the same material and diameter. This curve can be located at the bottom or the top of the stopper, depending on whether it is a loading (for example, stopper (1.2)) or unloading (for example, stopper (1.6)) stopper.

Then, each stopper comprises at least two closure seat (6.3), at least one upper valve (6.4), at least one lower valve (6.5) and actuating pistons ((6.4.1) and (6.5.1)) corresponding to each valve, presented on the outer part of the stopper in order allow the movement of the cork therein.

Optionally, in the sloping part of the cone of each valve (6.4) and (6.5) there is a slot (6.6) wherein an elastic element shaped like a ring providing a hermetic closure when lifting up the piston against the closure seat, is fitted.

In the vertical cylindrical body is at least one link (6.7) for the gas inlet and outlet, which are optionally separated by different links, and optionally at least one sleeve (6.8) for mounting two conventional level detectors.

At the free end of the stopper curve is a fixed or flexible flange (6.9) and at the other end will be a fixed or flexible link (6.10). The option of using a fixed or flexible flange or link will depend on the need for shifting or not the vibrations from the extractors to the stoppers.

By using this design of the stoppers and making the most use of the process pressures in the anterior and posterior extractors, if any, a closure and tight separation between each process step within the stoppers are produced. The closure system is guaranteed by using the closure seats (6.3) and valves (6.4 and 6.5), allowing the work in the process conditions, thus facilitating a filling and discharge in a short time and in a quick sequence. In addition, the stopper has at least a fluidization system for the granule, which facilitates its decanting.

The vertical movement of the valves (6.4) and (6.5) in the stoppers is carried out by the following mechanisms:
- The driving pistons ((6.4.1) and (6.5.1), respectively);
- The hermetic closure that is produced by the very pressure of the supercritical fluid (in case that the bottom of the second (1.4) and the top of the third stopper (1.6)). For this, some valves controlled by programming the corresponding stopper are used, which also mark the sequence of loads per time unit and, therefore, the granule amount passing to the next component. The hermetic closure also produces the residual fluid evacuation, once performed each load.
- The vibration of the extractor if the stopper is connected through a flexible connection to a stopper;
- The gravity itself.

While loading the stopper, a filling of vapor or supercritical fluid coming from the first (1.3) or second extractor (1.5), respectively, which must be evacuated by the gas outlet (6.7) (and/or inlet) link is produced, for then being processed according to their pressures in the processes previously described.

### The extractor.

Figure 7 illustrates a preferred embodiment of an extractor for extracting organic compounds from granulated cork using a supercritical fluid in an elevation, side, perspective, and A-A' sectional view.

This is a tube (7.1), preferably weldless, cylindrical, hollow, made of stainless steel AISI 316L, diameter and length of which, will depend on the flowrate of the granule to be treated and on the processing or residence time of the granule therein, wherein the tube is supported on at least one platform provided with a vibration system (7.2) and optionally with a mechanism for varying its horizontality. Only the vibration system advances the granule from loading to unloading, which together with the horizontal variation allows adjusting the speed. This vibratory movement produces a ballistic trajectory to each grain in the longitudinal direction, but also as being the extractor cylindrical, the granules that are in the tube walls are subjected to a fall toward the center producing a very homogeneous mixture and joined to the function of the injectors, and thus achieving that each granule has an intimate contact with the supercritical fluid. This feature reduces to half or less the processing time and increases the yield of the extraction.

At least, at the ends of said tube, some flanges (7.3) area arranged, wherewith the tube is secured to the vibratory base, and can be joined to the inlet (or load) and outlet (or unload) stoppers using a flexible or fixed element.

At the bottom of the extractor, and preferably in a row, at least one injector (7.4) is inserted, function of which is to introduce the supercritical fluid. These injectors are fed from the injector manifold (7.4.2) through flexible pipes, being the control valves (7.4.1) just after said manifold.

At the top of the extractor is at least one outlet (7.5) wherein the gases with melted organic compounds come out, passing through a special filter (7.5.1) made of sintered steel in order to prevent the exit of solids, and joined to a manifold (7.5.2).

For each outlet there are preferably two inlet injectors, alternating the position to achieve a perfect circulation of dense gases and therefore a very high extraction. In addition, together with the movement of the extractor through the vibration, an intimate and homogeneous mixture of the granulated cork with the gases in supercritical state is enabled, shortening the time and increasing the extraction efficiency.

Around the outside of said tube several heating chambers are preferably arranged (in the view of the section A-A indicated as (7.6) and in the perspective view as several compartments of the assembly (7.7)), to maintain or vary the temperature conditions of the process within the extractor.

Each chamber will have its corresponding inlet of heater fluid (7.8), which can be either water or vapor, and its outlet for water or condensate (7.9). Each outlet and inlet optionally has its own control valve, along with a thermostat and/or pressure switch. Each inlet and outlet tube is flexible and comes to its respective manifold ((7.8.1) and (7.9.1), respectively).

These chambers, along with the valves for controlling the gas inlet and outlet, make the extractor to have sections with different pressures and temperatures all along being able to extract different organic compounds from the granulated cork according to its physical-chemical properties, previously mentioned.

Around the heating chambers, at least one isolation layer (7.10) is arranged, which in addition of preventing heat losses, maintains the temperature conditions. The tube, heating chamber and isolation layer assembly is indicated as the assembly (7.11).

The gases coming from this extractor will have a pressure above 60 bars, whereby are channeled toward the first process separator (4.2.1) described in Figures 4 and 5.

The construction features of the extractor for the extraction using vapor are identical, varying some details. The thickness of the first extractor (1.3) must withstand pressures of up to 10 bars and temperatures above 80°C, and the second extractor (1.5) pressures up to 150 bars and temperatures between 60 and 90°C. Also the length of the first extractor (1.3) may be less than the length of the second extractor (1.5), because the vapor processing times are lower than those of the supercritical fluid process. The dimensions of each extractor may be calculated by any skilled in the art and will not be set forth in detail in this description.

The diameter can optionally be the same between the two extractors if it is chosen to use stoppers also with the same diameter and thus utilizing the same diameter for the entire process, if a same or similar process to that described for Figure 1 is followed.

The injectors (7.4) inject vapor instead of supercritical fluid and the use of valves at the outlet thereof (7.4.1) is not essential, although is optional. By first applying an extraction using vapor, it results in melting and extracting much part of the organic compounds present in the granulated cork, and the cork cannulae are opened, facilitating the extraction using a supercritical fluid subsequently applied according to the invention previously described.

As the temperature in this extractor is not necessarily different at several parts along the extractor, a single heating-jacket (7.6) can be used.

The gases coming from this extractor are less than 10 bars, whereby are channeled toward the gas washing-tower (2.2) described in Figure 2.

### The condenser

As indicated in the processes of Figures 3 and 4, the condenser ((3.3) or (4.12)) is the responsible one for condensing the gases with a pressure between 10 and 60 bars in Figure 3, and coming from the last process separator in Figure 4. In Figure 8 a preferred embodiment example for one of the two or both condensers are illustrated.

The condenser has a conical shaped body (8.1) vertically positioned and welded at its bottom to a plate and at top to a Klopper type bottom. The conical shape of the body causes a large evaporation surface, which reduces the surface tension, increasing the evaporation capacity.

Within the body is a coolant liquid (8.2) wherein an exchanger tube bundle (8.3) is immersed. This tube bundle is joined by welding to an upper plate (8.3.1), whereby the gas is introduced, a lower plate (8.3.2), which is the plate welded to the conical body, whereby the condensate is poured to the lower lung (8.4).

The exchanger tubes are preferably mounted in a vertical position and inside of which a helical coil (8.3.4) has been introduced, which in addition of avoiding the usual condensate layer reducing the transmission, causes swirls in the gas, increasing the number of Reynolds and therefore the yield of condensation. The tubes are optionally also knurled at their outer face (8.3.5), wherewith the generation of gas bags hindering an effectively evaporation is avoid.

For knurling is understood in this invention that the metal on the outer face of the exchanger tubes is engraved in order to increase the contact surface of the gas inside the tube with the cooler fluid.

In the body there is also at least one baffle (8.6) which directs the evaporated gases to the outside of the tubes, significantly increasing the evaporation capacity, which would be obstructed by vapor bags with vertical ascending along the tubes.

In order to measure the level of the coolant liquid, there is a level meter, immersed at the top level of the coolant liquid and protruding from the outer top of the body (8.7)

To the Klopper type bottom, joined to the condenser body, the upper plate of the tube bundle has been joined on the inner and lower part, and a cylindrical ferrule on the top forming the gas inlet manifold (8.8). In addition there are two holes wherein two vertical tubes of large section (8.9) have been separately welded. The function of these tubes is to evacuate the gas coming from the evaporation of the coolant liquid wherein the tubes are immersed, and replacing the evaporated liquid.

The evacuated gas is directed to a reservoir (8.10) in which due to the higher volume expansion and drop separation plate (8.10.1), remains in conditions to be sucked by the refrigeration compressor (8.10.2) located apart, without the risk of carrying along drops.

In the same reservoir and below the plate (8.10.1) a tube (8.10.3) whereby the coolant liquid necessary for maintaining the coolant liquid level (8.2) in the body (8.1) is supplied, is incorporated; controlled by the level probe (8.7), which optionally sends a signal to a valve located on the refrigeration facility. Said tube (8.10.3) is provided with holes made in the center and directed to the plate (8.10.1) so that the possible drops produced in the expansion; do not mix with gas to be sucked by the compressor.

The way of building the condenser allows performing different sizes and power, by only changing the number and length of the exchanger tubes and therefore increasing the size of the plates ((8.3.1) and (8.3.2)) and of the body (8.1).

The condenser is preferably located on a lung in order to avoid problems when the temperature of said lung is punctually raised and when the evaporation occurs as a result of the pressure increasing. The reflux gas would be introduced in the vertical tubes of the condenser, wherewith a quickly condensation would be produced and thus a self-regulation of the balanced conditions of the gases. All this thanks to the power flexibility achieved by the tube exchangers when being immersed.

## Claims

1. Method for extracting organic compounds from granulated cork **characterized in that** it comprises an extraction step by dispersively applying a supercritical fluid comprising at least CO₂ between 40 -90 % and N₂O between 10-60 % being both in a supercritical state.

2. Method according to claim 1 **characterized in that** it comprises previously to the extraction by dispersively applying a supercritical fluid, an extraction step by applying vapor.

3. Method according to claim 1 and 2 **characterized in that** the extraction step by applying vapor and the extraction by applying a supercritical fluid are continuously performed, without interruptions between both steps.

4. Method according to claim 1 **characterized in that** other gases from the family of alkanes, alkenes, or organic alcohols are added to the dispersed application of a supercritical fluid.

5. Method according to any of claims 1, 2, or 4 **characterized in that** in the extraction step by applying a supercritical fluid, the supercritical fluid is applied at pressures between 75 and 150 bars, at temperatures between 60 and 90°C.

6. Method according to any of claims 2 or 3 **characterized in that** in the extraction step by applying vapor, the vapor is applied at pressures between 1 and 10 bars, and a temperature above 80°C.

7. Method according to any of claims 1, 2, 3, 6 or 7 **characterized in that** any of the extraction steps is performed under vibration.

8. Method according to any of preceeding claims **characterized in that** the gases with a pressure less than 10 bars coming from the continuous process for extracting organic compounds from granulated cork are driven to at least one conventional gas washing-tower by actuating the control valves.

9. Method according to claims 1-8 **characterized in that** the gases with a pressure between 10 and 60 bars coming from the continuous process for extracting organic compounds from granulated cork are driven to at least one recovery condenser by actuating the control valves.

10. Method according to claims 1 -8 **characterized in that** the gases with a pressure higher than 60 bars coming from the continuous process for extracting organic compounds from granulated cork are driven to at least one process separator by actuating the control valves.

11. Method according to claim 11 **characterized in that** the gases driven to at least one process separator are subjected to a separation in precipitated fluids and gases, wherein the fluids are poured into at least one container and transported to at least one conventional gas washing-tower, and the gases are processed in one or more additional processes separators located in series.

## Patentansprüche

1. Verfahren zur Extraktion von organischen Verbindungen aus granuliertem Kork, **dadurch gekennzeichnet, dass** es einen Extraktionsschritt durch Anwendung eines superkritischen Fluids mittels Dispersion umfasst, wobei das Fluid aus zumindest 40-90% CO₂ und 10-60% N₂O besteht, die sich beide in superkritischem Zustand befinden.

2. Verfahren nach Anspruch 1, **dadurch gekennzeichnet, dass** es vor dem Extraktionsschritt durch Anwendung eines superkritischen Fluids mittels Dispersion einen Extraktionsschritt durch Anwendung von Dampf umfasst.

3. Verfahren nach Ansprüche 1 und 2, **dadurch gekennzeichnet, dass** der Extraktionsschritt durch Anwendung von Dampf und der Extraktionsschritt durch Anwendung eines superkritischen Fluids jeweils kontinuierlich, ohne Unterbrechung zwischen den beiden Schritten durchgeführt werden.

4. Verfahren nach Anspruch 1, **dadurch gekennzeichnet, dass** andere Gase der Familie der Alkane, Alkene oder organische Alkohole der Anwendung des superkritischen Fluids mittels Dispersion hinzugefügt werden.

5. Verfahren nach einem der Ansprüche 1, 2 oder 4, **dadurch gekennzeichnet, dass** beim Extraktionsschritt durch Anwendung eines superkritischen Fluids dieses superkritische Fluid mit einem Druck von 75 bis 150 bar und einer Temperatur zwischen 60 und 90°-C eingesetzt wird.

6. Verfahren nach einem der Ansprüche 2 oder 3, **dadurch gekennzeichnet, dass** beim Extraktionsschritt durch Anwendung von Dampf dieser Dampf mit einem Druck von 1 bis 10 bar und einer Temperatur über 80°-C eingesetzt wird.

7. Verfahren nach einem der Ansprüche 1, 2, 3, 6 oder 7, **dadurch gekennzeichnet, dass** einer der Extraktionsschritte unter Vibration erfolgt.

8. Verfahren nach einem der vorhergehenden Ansprüche, **dadurch gekennzeichnet, dass** die Gase mit einem Druck von weniger als 10 bar, die aus dem kontinuierlichen Extraktionsvorgang organischer Verbindungen aus granuliertem Kork stammen, durch Betätigung von Steuerventilen zu wenigstens einem konventionellen Gaswaschturm geführt werden.

9. Verfahren nach Ansprüche 1 bis 8, **dadurch gekennzeichnet, dass** die Gase mit einem Druck von 10 bis 60 bar, die aus dem kontinuierlichen Extraktionsvorgang organischer Verbindungen aus granuliertem Kork stammen, durch Betätigung von Steuerventilen zu wenigstens einem Rückgewinnungskondensator geführt werden.

10. Verfahren nach Ansprüche 1 bis 8, **dadurch gekennzeichnet, dass** die Gase mit einem Druck von über 60 bar, die aus dem kontinuierlichen Extraktionsvorgang organischer Verbindungen aus granuliertem Kork stammen, durch Betätigung von Steuerventilen zu wenigstens einem Prozesstrenner geführt werden.

11. Verfahren nach Anspruch 10, **dadurch gekennzeichnet, dass** die zu wenigstens einem Prozesstrenner geführten Gase einer Trennung in ausgefällte Fluide und Gase unterzogen werden, wobei die Fluide in wenigstens einen Behälter gefüllt und zu wenigstens einem konventionellen Gaswaschturm transportiert werden und die Gase in einem oder mehreren zusätzlichen, in einer Reihe angeordneten Prozesstrennern verarbeitet werden.

## Revendications

1. Méthode d'extraction de composés organiques à partir de liège granulé, **caractérisée en ce qu'**elle comprend une étape d'extraction par application, sous forme de dispersion, d'un fluide supercritique comprenant, au moins, 40 à 90 % de CO₂ et 10 à 60 % de N₂O se trouvant tous deux dans un état supercritique.

2. Méthode, selon la revendication 1, **caractérisée en ce qu'**elle comprend, avant l'extraction par application sous forme de dispersion d'un fluide supercritique, une étape d'extraction par application de vapeur.

3. Méthode, selon les revendications 1 et 2, **caractérisée en ce que** les étapes d'extraction par application de vapeur et d'extraction par application d'un fluide supercritique sont effectuées en continu, sans interruptions entre les deux étapes.

4. Méthode, selon la revendication 1, **caractérisée en ce que** d'autres gaz de la famille des alcanes, alcènes ou alcools organiques sont ajoutés à l'application sous forme dispersée du fluide supercritique.

5. Méthode, selon l'une quelconque des revendications 1, 2, ou 4, **caractérisée en ce que**, dans l'étape d'extraction par application d'un fluide supercritique, le fluide supercritique est appliqué à des pressions comprises entre 75 et 150 bars, à des températures comprises entre 60 et 90 °-C.

6. Méthode, selon l'une quelconque des revendications 2 ou 3, **caractérisée en ce que**, dans l'étape d'extraction par application de vapeur, la vapeur est appliquée à des pressions comprises entre 1 et 10 bars, et à une température supérieure à 80 °-C.

7. Méthode, selon l'une quelconque des revendications, 1, 2, 3, 6 ou 7, **caractérisée en ce que** l'une des étapes d'extraction est réalisée sous l'effet de la vibration.

8. Méthode, selon l'une quelconque des revendications précédentes, **caractérisée en ce que** les gaz ayant une pression de moins de 10 bars, qui proviennent du processus continu pour l'extraction des composés organiques à partir de liège granulé, sont conduits vers, au moins, une tour traditionnelle de lavage du gaz par actionnement des soupapes de commande.

9. Méthode, selon les revendications 1 à 8, **caractérisée en ce que** les gaz ayant une pression comprise entre 10 et 60 bars, qui proviennent du processus continu pour l'extraction des composés organiques à partir de liège granulé, sont conduits vers, au moins, un condensateur de récupération en actionnant les soupapes de commande.

10. Méthode, selon les revendications 1 à 8, **caractérisée en ce que** les gaz ayant une pression supérieure à 60 bars, qui proviennent du processus continu pour l'extraction des composés organiques à partir de liège granulé, sont conduits vers, au moins, un séparateur par actionnement des soupapes de commande.

11. Méthode, selon la revendication 10, **caractérisée en ce que** les gaz conduits vers, au moins, un séparateur, sont soumis à un procédé de séparation en fluides précipités et en gaz, de sorte que les fluides sont versés dans, au moins, un conteneur et transportés vers, au moins, une tour traditionnelle de lavage des gaz, et les gaz sont traités dans un ou plusieurs séparateurs supplémentaires situés en série.
